# EUROPEAN PATENT SPECIFICATION

(11) **EP 2 017 297 B1**
(45) Date of publication and mention of the grant of the patent: **14.07.2010**
(21) Application number: 07741351.6
(22) Date of filing: 10.04.2007
(51) Int. Cl.: C08G 64/32

(54) **ORGANIC ZINC CATALYST, AND PROCESS FOR PRODUCTION OF POLY(ALKYLENE CARBONATE) USING THE SAME**
ORGANISCHER ZINKKATALYSATOR UND VERFAHREN ZUR HERSTELLUNG VON POLY(ALKYLENCARBONAT) DAMIT
CATALYSEUR ORGANOZINCIQUE ET PROCEDE DE PRODUCTION DE POLY(CARBONATE D'ALKYLENE) L'UTILISANT

(30) Priority: 09.05.2006 JP 2006130114
(43) Date of publication of application: 21.01.2009
(73) Proprietor: SUMITOMO SEIKA CHEMICALS CO., LTD., Kako-gun, Hyogo 675-0145 (JP)
(72) Inventor: FUJIMOTO, Nobutaka, Himeji-shi, Hyogo 672-8076 (JP); OKAMOTO, Masafumi, Himeji-shi, Hyogo 672-8076 (JP)
(74) Representative: Adam, Holger
(86) International application number: PCT/JP2007/057915
(87) International publication number: WO 2007/129525

(56) References cited:
- JP-A- 02 292 328
- JP-A- 52 151 116
- JP-A- 2005 530 021
- JP-A- 2006 257 374

## Description

### TECHNICAL FIELD

The present invention relates to an organic zinc catalyst to be used for the reaction for producing a poly(alkylene carbonate) from carbon dioxide and an epoxide and to a method of producing a poly(alkylene carbonate) using the same.

### BACKGROUND ART

Since the industrial revolution, mankind has consumed fossil fuels in large quantities to build up the modern society and, on the other hand, has increased the carbon dioxide concentration in the atmosphere and has still been promoting this increase through environmental destruction such as forest destruction.

Global warming is said to have been caused by the increases of greenhouse effect gases such as carbon dioxide, chlorofluorocarbons and methane in the atmosphere. Therefore, it is very important to reduce the concentration of carbon dioxide, which is highly contributive to global warming, in the atmosphere, and various research works have been done on the global scale to control the emission thereof and fix or immobilize the same, for instance.

In particular, the copolymerization reaction between carbon dioxide and an epoxide, which has been found out by Inoue et al., is expected to serve as a reaction contributing to the solution of the global warming problem and has been energetically studied not only from the viewpoint of chemical carbon dioxide fixation but also from the viewpoint of utilization of carbon dioxide as a carbon source (see also Non-Patent Document 1).

The reaction product from diethyl zinc and a compound containing a plurality of active hydrogens has been disclosed as a catalyst effective in the copolymerization of carbon dioxide and an epoxide (see also Non-Patent Document 2). According to this, the compound containing a plurality of active hydrogens may be a compound containing, in each molecule, two active hydrogens capable of reacting with diethyl zinc, for example water, a primary amine, a dihydric phenol, a dibasic aromatic carboxylic acid or aromatic hydroxy acid; it is described that various aliphatic polycarbonates can be obtained by using the reaction product derived from such a compound and diethyl zinc.

Regarding the catalyst, a zinc-containing solid catalyst obtained by bringing zinc oxide and an aliphatic dicarboxylic acid into contact with each other in the presence of an organic solvent by means of mechanical grinding treatment has also been proposed (see also Patent Document 1). Further, organic metal salts obtained by reacting a metal oxide such as zinc oxide or a metal hydroxide such as calcium hydroxide, a dicarboxylic acid such as isophthalic acid and a monocarboxylic acid such as propionic acid have been proposed (see also Patent Document 2) .

However, the catalysts so far proposed have various drawbacks. For example, the catalyst described in Non-Patent Document 2 has the following problems: it is necessary to use diethyl zinc which is expensive and difficult to handle, the catalyst is low in polymerizing activity and there is a high possibility of the catalyst getting mixed in the product in the purification step following the polymerization reaction. The catalysts described in Patent Document 1 and Patent Document 2 also have a problem of their polymerizing activity being low. In view of these facts, the advent of a catalyst excellent in polymerizing activity has been awaited.
Non-Patent Document 1: Macromolecular Syntheses, Vol.7, p.87 (1969)
Non-Patent Document 2: Japanese Journal of Polymer Science and Technology, Vol.62, p.131 (2005)
Patent Document 1: Japanese Kokai Publication Hei-2-47134
Patent Document 2: Japanese Kokai Publication Sho-52-151116

### DISCLOUSRE OF INVENTION

### PROBLEMS TO BE SOLVED BY THE INVENTION

It is an object of the present invention to provide a novel organic zinc catalyst very high in polymerizing activity in the reaction for producing a poly(alkylene carbonate) from carbon dioxide and an epoxide as well as a method of producing a poly(alkylene carbonate) using the same.

### MEANS FOR SOLVING THE PROBLEMS

The present invention relates to an organic zinc catalyst and a method of producing a poly(alkylene carbonate) using the same, as defined below.

Item 1: An organic zinc catalyst to be used for the reaction for producing a poly(alkylene carbonate) from carbon dioxide and an epoxide, which is obtained by reacting a zinc compound, an aliphatic dicarboxylic acid and an aliphatic monocarboxylic acid in a mole ratio of 0.0001 to 0.1 relative to the aliphatic dicarboxylic acid.
Item 2: The organic zinc catalyst according to Item 1, wherein the zinc compound is zinc oxide or zinc hydroxide.
Item 3: The organic zinc catalyst according to Item 1 or 2, wherein the aliphatic dicarboxylic acid is at least one member selected from the group consisting of malonic acid, succinic acid, glutaric acid, adipic acid and sebacic acid.
Item 4: The organic zinc catalyst according to any of Items 1 to 3, wherein the aliphatic monocarboxylic acid is at least one member selected from the group consisting of formic acid, acetic acid and propionic acid.
Item 5: The organic zinc catalyst according to Item 1 or 2 which has a structure represented by the general formula (1): 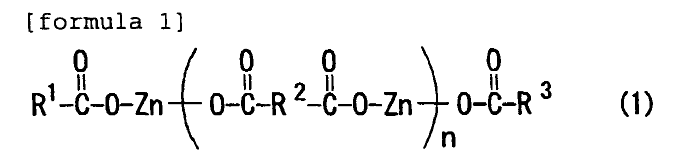 In the above formula, R¹ and R³ may be the same or different and each independently represents a hydrogen atom or a methyl group, n represents an integer of 1 to 100000, R² represents a trimethylene or tetramethylene group, and when n is an integer of not smaller than 2, the n R² groups may be the same or different.
Item 6: A method of producing a poly(alkylene carbonate) wherein carbon dioxide is reacted with an epoxide in the presence of an organic zinc catalyst obtained by reacting a zinc compound,an aliphatic dicarboxylic acid and an aliphatic monocarboxylic acid in a mole ratio of 0.0001 to 0.1 relative to the aliphatic dicarboxylic acid.
In the following, the present invention is described in detail.

The organic zinc catalyst of the present invention can be obtained by reacting a zinc compound, an aliphatic dicarboxylic acid and a specific proportion of an aliphatic monocarboxylic acid and shows very high polymerizing activity in the copolymerization reaction of carbon dioxide and an epoxide to give a poly(alkylene carbonate).

The zinc compound to be used in the practice of the present invention is not particularly restricted but includes, for example, inorganic zinc compounds such as zinc oxide, zinc hydroxide, zinc nitrate and zinc carbonate as well as organic zinc compounds such as zinc acetate, diethyl zinc and dibutyl zinc. Among them, zinc oxide and zinc hydroxide are preferably used since they can give organic zinc catalysts showing high activity. Those zinc compounds may be used singly or two or more of them may be used in combination.

The above-mentioned zinc compounds may be commercially available ones as such or may be synthesized by appropriate methods. As the method of synthesizing zinc oxide as an example among the zinc compounds mentioned above, there may be mentioned the method comprising decomposing zinc oxalate by heating at 400°C or above, the method comprising dehydrating zinc hydroxycarbonate by heating, the method comprising combusting metallic zinc and the method comprising roasting a zinc ore together with a reducing agent and subjecting the zinc vapor formed to oxidation with air, among others.

The aliphatic dicarboxylic acid to be used in the practice of the present invention is not particularly restricted but includes, for example, malonic acid, succinic acid, glutaric acid, adipic acid and sebacic acid, among others. Among them, glutaric acid and adipic acid are preferably used since they can give organic zinc catalysts showing high activity. Those aliphatic dicarboxylic acids may be used singly or two or more of them may be used in combination.

Generally, the aliphatic dicarboxylic acid is preferably used in a mole ratio of 0. 1 to 1.5, more preferably 0.5 to 1.0, relative to the zinc compound. When the mole ratio of the aliphatic dicarboxylic acid is lower than 0.1, the reaction may hardly proceed. When the mole ratio of the aliphatic dicarboxylic acid is higher than 1.5, the effect commensurate with the amount used may not be attained, only resulting in an economic disadvantage.

The aliphatic monocarboxylic acid to be used in the practice of the present invention is not particularly restricted but includes, for example, formic acid, acetic acid, propionic acid and the like. Among them, formic acid and acetic acid are preferably used since they can give organic zinc catalysts showing high activity. Those aliphatic monocarboxylic acids may be used singly or two or more of them may be used in combination.

In the practice of the present invention, the aliphatic monocarboxylic acid is used in a mole ratio of 0.0001 to 0.1, preferably 0.001 to 0.05, relative to the aliphatic dicarboxylic acid. When the mole ratio of the aliphatic monocarboxylic acid is lower than 0. 0001, the catalyst obtained will have a structure terminally containing a carboxylic acid group and will be low in activity. When the mole ratio of the aliphatic monocarboxylic acid is higher than 0.1, the effect commensurate with the amount used will not be attained and the catalyst obtained will be low in activity.

The reaction solvent to be used in the reaction of the zinc compound, the aliphatic dicarboxylic acid and the aliphatic monocarboxylic acid for obtaining the organic zinc catalyst of the present invention is not particularly restricted but various organic solvents can be used. As such organic solvents, there may specifically be mentioned, for example, aromatic hydrocarbon type solvents such as benzene, toluene and xylene; ether type solvents such as diethyl ether, tetrahydrofuran and dioxane; and carbonate type solvents such as dimethyl carbonate, diethyl carbonate and propylene carbonate; as well as acetonitrile, dimethylformamide, dimethyl sulfoxide, hexamethylphosphotriamide and the like. Among them, aromatic hydrocarbon type solvents such as benzene, toluene and xylene are preferably used since such reaction solvents can be recycled with ease.

The amount of the reaction solvent to be used is not particularly restricted but, for allowing the reaction to proceed smoothly and producing the effect commensurate with the amount used, it is preferably 500 to 10000 parts by weight per 100 parts by weight of the zinc compound.

The reaction temperature is not particularly restricted but preferably is 20 to 110°C, more preferably 50 to 100°C. When the reaction temperature is below 20°C, a prolonged period of time may possibly be required for the reaction. When the reaction temperature is above 110°C, side reaction may occur, possibly leading to decreases in yield. The reaction time varies depending on the reaction temperature, hence cannot be absolutely specified; generally, however, it is 1 to 20 hours.

The organic zinc catalyst of the present invention is obtained by reacting a zinc compound, an aliphatic dicarboxylic acid and a specific proportion of an aliphatic monocarboxylic acid and is very high in polymerizing activity in the copolymerization reaction for producing a poly(alkylene carbonate) from carbon dioxide and an epoxide.

The reason why the organic zinc catalyst of the present invention has very high polymerizing activity as compared with the conventional organic zinc catalysts is not clear but may be presumably as follows.

First, the organic zinc catalyst described in Patent Document 1 is a catalyst obtained by reacting zinc oxide with an aliphatic dicarboxylic acid and therefore has a terminal carboxylic acid group-containing structure. Presumably, this carboxylic acid group donates a hydrogen atom (proton) to a reaction-active site on the occasion of poly(alkylene carbonate) production and thereby terminates the reaction, leading to a decrease in the polymerizing activity of the catalyst. Next, the organic zinc catalyst described in Patent Document 2, which is a catalyst obtained by reacting a metal oxide such as zinc oxide, a dicarboxylic acid such as isophthalic acid and a monocarboxylic acid such as propionic acid, contains a raw material-derived aromatic ring group. Presumably, the interaction between those aromatic ring groups causes association of the catalyst molecules and reduces the number of catalytically active sites, rendering the catalyst low in polymerizing activity. Further, the monocarboxylic acid is used in a relatively large amount and, therefore, presumably, the influence of the competitive reactions of the dicarboxylic acid and the monocarboxylic acid against zinc oxide becomes great and the number of active sites on the catalyst obtained becomes relatively small, hence the polymerizing activity of the catalyst becomes low.

On the contrary, the organic zinc catalyst of the present invention, owing to the use of a zinc compound, an aliphatic dicarboxylic acid and a specific proportion of an aliphatic monocarboxylic acid, is substantially free of any terminal carboxylic acid group-containing structure and of any aromatic ring group. Furthermore, in the case of the organic zinc catalyst of the present invention, the decrease in number of active sites on the catalyst due to the competitive reactions of the aliphatic dicarboxylic acid and aliphatic monocarboxylic acid against zinc oxide is effectively inhibited. Accordingly, the organic zinc catalyst of the present invention has substantially none of the above-mentioned reasons for which the copolymerization reaction for producing a poly(alkylene carbonate) is inhibited; therefore, the catalyst is considered to have very high polymerizing activity.

In the practice of the present invention, the method of reacting a zinc compound, an aliphatic dicarboxylic acid and a specific proportion of an aliphatic monocarboxylic acid is not particularly restricted; the three reactants may be subjected to reaction simultaneously, or one of the aliphatic dicarboxylic acid and aliphatic monocarboxylic acid may first be reacted with the zinc compound, followed by the reaction of the reaction product with the other acid. From the viewpoint that the organic zinc catalyst obtained should be inhibited from having the above-mentioned terminal carboxylic acid group-containing structure, however, it is desirable that the aliphatic dicarboxylic acid be first reacted with the zinc compound and the reaction product formed be then reacted with the aliphatic monocarboxylic acid.

As the thus-obtainable organic zinc catalyst of the present invention, there may be mentioned, for example, the ones having a structure represented by the general formula (1) given below. 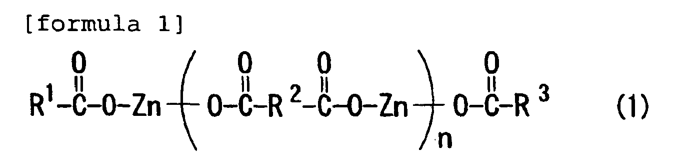 In the above formula, R¹ and R³ may be the same or different and each independently represents a hydrogen atom or a methyl group, n represents an integer of 1 to 100000, R² represents a trimethylene or tetramethylene group, and when n is an integer of not smaller than 2, the n R² groups may be the same or different.
Such organic zinc catalysts contain neither terminal carboxylic acid groups nor aromatic ring groups and, therefore, are high in polymerizing activity.

The thus-obtained organic zinc catalyst of the present invention can be isolated from the reaction mixture in the conventional manner, for example, by filtration, and can be used for carrying out the copolymerization reaction to produce a poly(alkylene carbonate) from carbon dioxide and an epoxide. In the above-mentioned copolymerization reaction, it is also possible to subsequently use the organic zinc catalyst of the present invention in the form contained in the reaction mixture, as such, without isolating from the reaction mixture. However, the reaction mixture may sometimes contain moisture and/or some other component formed upon the reaction of the zinc compound, the aliphatic dicarboxylic acid and the aliphatic monocarboxylic acid and capable of adversely affecting the reaction-active sites on the occasion of poly(alkylene carbonate) production. Therefore, when the organic zinc catalyst of the present invention is used in the form contained in the reaction mixture, it is preferred that the moisture and/or the like be removed by such a separation procedure as azeotropy in advance prior to the use thereof.

Now, the method of producing a poly(alkylene carbonate) which comprises reacting carbon dioxide and an epoxide in the presence of an organic zinc catalyst obtained by reacting a zinc compound, an aliphatic dicarboxylic acid and an aliphatic monocarboxylic acid in a mole ratio of 0.0001 to 0.1 relative to the aliphatic dicarboxylic acid is described in detail.

In the method of producing a poly (alkylene carbonate) of the present invention, the copolymerization reaction for obtaining a poly(alkylene carbonate) from carbon dioxide and an epoxide is carried out in the presence of the above-mentioned organic zinc catalyst obtained by reacting a zinc compound, an aliphatic dicarboxylic acid and an aliphatic monocarboxylic acid in a mole ratio of 0.0001 to 0.1 relative to the aliphatic dicarboxylic acid, and the reaction efficiency thereof is very high. In the purification step after the polymerization reaction, the catalyst can be separated with ease.

The epoxide to be used in the practice of the present invention is not particularly restricted but includes, for example, ethylene oxide, propylene oxide, 1-butene oxide, 2-butene oxide, isobutylene oxide, 1-pentene oxide, 2-pentene oxide, 1-hexene oxide, 1-octene oxide, 1-decene oxide, cyclopentene oxide, cyclohexene oxide, styrene oxide, vinylcyclohexane oxide, 3-phenylpropylene oxide, 3,3,3-trifluoropropylene oxide, 3-naphthylpropylene oxide, 3-phenoxypropylene oxide, 3-naphthoxypropylene oxide, butadiene monoxide, 3-vinyloxypropylene oxide and 3-trimethylsilyloxypropylene oxide. Among them, ethylene oxide and propylene oxide are preferably used from the high reactivity viewpoint. Those epoxides may be used singly or two or more of them may be used in combination.

The carbon dioxide pressure to be used in the practice of the present invention is not particularly restricted but it is generally preferred that the pressure be 0.1 to 20 MPa, more preferably 0.1 to 10 MPa, still more preferably 0.1 to 5 MPa. When the carbon dioxide pressure used is higher than 20 MPa, the effect commensurate with the pressure used will not be attained, only resulting in an economic disadvantage.

In the practice of the present invention, the above-mentioned organic zinc catalyst is preferably used in an amount of 0.001 to 20 parts by weight, more preferably 0.01 to 10 parts by weight, per 100 parts by weight of the epoxide. When the organic zinc catalyst is used in an amount smaller than 0.001 parts by weight, the reaction may hardly proceed. When the amount of the organic zinc catalyst to be used is in excess of 20 parts by weight, the effect commensurate with the amount used may not be attained, only resulting in an economic disadvantage.

The solvent to be used in the above-mentioned copolymerization reaction is not particularly restricted but includes various organic solvents. As such organic solvents, there may specifically be mentioned, for example, aliphatic hydrocarbon type solvents such as pentane, hexane, octane, decane and cyclohexane; aromatic hydrocarbon type solvents such as benzene, toluene and xylene; halogenated hydrocarbon type solvents such as chloromethane, methylene dichloride, chloroform, carbon tetrachloride, 1,1-dichloroethane, 1,2-dichloroethane, ethyl chloride, trichloroethane, 1-chloropropane, 2-chloropropane, 1-chlorobutane, 2-chlorobutane, 1-chloro-2-methylpropane, chlorobenzene and bromobenzene; carbonates type solvents such as dimethyl carbonate, diethyl carbonate and propylene carbonate; and so forth.

The amount of the above-mentioned solvent to be used is not particularly restricted but, for allowing the reaction to proceed smoothly and producing the effect commensurate with the amount used, it is preferably 500 to 10000 parts by weight per 100 parts by weight of the epoxide.

In addition, the method of producing a poly(alkylene carbonate) of the present invention may work in a different mode of polymerization, for example, solution polymerization or precipitation polymerization, depending on the solvent species employed and the amount thereof as used. In any mode of polymerization, the copolymerization reaction can proceed without any problem, and the reaction efficiency thereof is very high.

The reaction temperature is not particularly restricted but preferably is 20 to 100°C, more preferably 40 to 80°C. At reaction temperatures lower than 20°C, a prolonged period of time may be required for the reaction. At reaction temperatures exceeding 100°C, side reactions may occur, leading to decreases in yield. The reaction time varies depending on the reaction temperature, hence cannot be absolutely specified; generally, however, it is 2 to 40 hours.

In the practice of the present invention, the method of mixing the above-mentioned organic zinc catalyst, carbon dioxide and an epoxide is not particularly restricted but, from the ready mixing viewpoint, the method comprising mixing the organic zinc catalyst with the epoxide and then adding carbon dioxide is preferred.

The thus-produced poly(alkylene carbonate) can be isolated by removing the catalyst and impurities by filtration or washing using a dilute aqueous solution of an acid or alkali and then dried, for example, by drying under reduced pressure.

### EFFECTS OF THE INVENTION

According to the present invention, it is possible to provide an organic zinc catalyst showing very high polymerizing activity in the copolymerization reaction for producing a poly(alkylene carbonate) from carbon dioxide and an epoxide as well as a method of producing a poly (alkylene carbonate) using the same.

### BEST MODES FOR CARRYING OUT THE INVENTION

The following examples illustrate the present invention more specifically. These examples are, however, by no means limitative of the scope of the present invention.

### Example 1

### <Organic zinc catalyst production>

A 300-mL four-necked flask equipped with a condenser, thermometer and stirrer was charged with 8.1 g (100 mmol) of zinc oxide, 12.7 g (96 mmol) of glutaric acid, 0.1 g (2 mmol) of acetic acid and 150 mL of toluene. Then, in a nitrogen atmosphere, the temperature was raised to 55°C and the reaction was allowed to proceed at the same temperature for 4 hours with stirring. Thereafter, the temperature was raised to 110°C and the moisture was azeotropically removed at the same temperature over 4 hours with stirring, and the subsequent cooling to room temperature gave a reaction mixture containing an organic zinc catalyst of the present invention. A portion of this reaction mixture was separated and filtered, and the thus-obtained organic zinc catalyst of the present invention was subjected to IR measurement (using Avatar 360 (trade name), product of Thermo Nicolet Japan Co.) to observe no peak based on carboxylic acid group.

### <Poly(alkylene carbonate) production>

A one-liter autoclave equipped with a thermometer and stirrer was charged with 8.0 mL of the above-mentioned reaction mixture (containing 1.0 g of the organic zinc catalyst of the present invention), 200 mL of hexane, 35.2 g (0.80 mol) of ethylene oxide and carbon dioxide. In a nitrogen atmosphere, the system was adjusted to 60°C and 1.5 MPa and the polymerization reaction was carried out for 6 hours while carbon dioxide was supplemented in accordance with the consumption thereof. Thereafter, the autoclave was cooled and depressurized, and a white polymer-containing hexane slurry was obtained. This was filtered, and the solid was washed with 0.5 L of a 1% aqueous hydrochloric acid solution, further washed with pure water and then dried under reduced pressure to give 68.4 g of poly(ethylene carbonate).

The poly(ethylene carbonate) obtained could be identified based on the following physical characteristics thereof.
IR (KBr): 1740, 1447, 1386, 1217, 1029, 785 (cm⁻¹)

### Example 2

80.8 g of poly(propylene carbonate) was obtained in the same manner as Example 1 except that, in the poly(alkylene carbonate) production in Example 1, 46.4 g (0.80 mol) of propylene oxide was used in lieu of 35.2 g (0.80 mol) of ethylene oxide.

The poly(propylene carbonate) obtained could be identified based on the following physical characteristics thereof.
IR (KBr): 1742, 1456, 1381, 1229, 1069, 787 (cm⁻¹)

### Example 3

### <Organic zinc catalyst production>

A 300-mL four-necked flask equipped with a condenser, thermometer and stirrer was charged with 8.1 g (100 mmol) of zinc oxide, 12.7 g (96 mmol) of glutaric acid and 150 mL of toluene. Then, in a nitrogen atmosphere, the temperature was raised to 55°C and the reaction was allowed to proceed at the same temperature for 2 hours with stirring. Thereafter, 0.1 g (2 mmol) of acetic acid was further added and the reaction was allowed to proceed at the same temperature for 2 hours with stirring. Then, the temperature was raised to 110°C and the moisture was azeotropically removed at the same temperature over 4 hours with stirring, and the subsequent cooling to room temperature gave a reaction mixture containing an organic zinc catalyst of the present invention. A portion of this reaction mixture was separated and filtered, and the thus-obtained organic zinc catalyst of the present invention was subjected to IR measurement (using Avatar 360 (trade name), product of Thermo Nicolet Japan Co.) to observe no peak based on carboxylic acid group.

### <Poly(alkylene carbonate) production>

A one-liter autoclave equipped with a thermometer and stirrer was charged with 8.0 mL of the above-mentioned reaction mixture (containing 1.0 g of the organic zinc catalyst of the present invention), 200 mL of hexane, 35.2 g (0.80 mol) of ethylene oxide and carbon dioxide. In a nitrogen atmosphere, the system was adjusted to 60°C and 1.5 MPa and the polymerization reaction was carried out for 6 hours while carbon dioxide was supplemented in accordance with the consumption thereof. Thereafter, the autoclave was cooled and depressurized, and a white polymer-containing hexane slurry was obtained. This was filtered, and the solid was washed with 0.5 L of a 1% aqueous hydrochloric acid solution, further washed with pure water and then dried under reduced pressure to give 70.1 g of poly(ethylene carbonate).

The poly(ethylene carbonate) obtained could be identified based on the following physical characteristics thereof.
IR (KBr): 1741, 1447, 1385, 1218, 1028, 784 (cm⁻¹)

### Example 4

A reaction mixture containing an organic zinc catalyst of the present invention was obtained in the same manner as in Example 3 except that, in the organic zinc catalyst production in Example 3, 0.1 g (2 mmol) of formic acid was used in lieu of 0.1 g (2 mmol) of acetic acid. Upon IR measurement of this organic zinc catalyst (using Avatar 360 (trade name), product of Thermo Nicolet Japan Co.), no peak based on carboxylic acid group was observed.

Then, 69.2 g of poly (ethylene carbonate) was obtained in the same manner as in Example 3 except that, in the poly (alkylene carbonate) production in Example 3, 8.0 mL of the above-mentioned reaction mixture (containing 1.0 g of the organic zinc catalyst of the present invention) was used.

The poly(ethylene carbonate) obtained could be identified based on the following physical characteristics thereof.
IR (KBr): 1739, 1447, 1386, 1219, 1029, 783 (cm⁻¹)

### Example 5

A reaction mixture containing an organic zinc catalyst of the present invention was obtained in the same manner as in Example 3 except that, in the organic zinc catalyst production in Example 3, 9.9 g (100 mmol) of zinc hydroxide was used in lieu of 8.1 g (100 mmol) of zinc oxide. Upon IR measurement of this organic zinc catalyst (using Avatar 360 (trade name), product of Thermo Nicolet Japan Co.), no peak based on carboxylic acid group was observed.

Then, 65.1 g of poly (ethylene carbonate) was obtained in the same manner as in Example 3 except that, in the poly (alkylene carbonate) production in Example 3, 8.0 mL of the above-mentioned reaction mixture (containing 1.0 g of the organic zinc catalyst of the present invention) was used.

The poly(ethylene carbonate) obtained could be identified based on the following physical characteristics thereof.
IR (KBr) : 1740, 1445, 1385, 1220, 1026, 783 (cm⁻¹)

### Example 6

A reaction mixture containing an organic zinc catalyst of the present invention was obtained in the same manner as in Example 3 except that, in the organic zinc catalyst production in Example 3, 14.0 g (96 mmol) of adipic acid was used in lieu of 12.7 g (96 mmol) of glutaric acid. Upon IR measurement of this organic zinc catalyst (using Avatar 360 (trade name), product of Thermo Nicolet Japan Co.), no peak based on carboxylic acid group was observed.

Then, 59.2 g of poly (ethylene carbonate) was obtained in the same manner as in Example 3 except that, in the poly (alkylene carbonate) production in Example 3, 8.0 mL of the above-mentioned reaction mixture (containing 1.0 g of the organic zinc catalyst of the present invention) was used.

The poly(ethylene carbonate) obtained could be identified based on the following physical characteristics thereof.
IR (KBr): 1737, 1442, 1386, 1220, 1024, 783 (cm⁻¹)

### Comparative Example 1

### <Organic zinc catalyst production>

A 300-mL four-necked flask equipped with a condenser, thermometer and stirrer was charged with 8.1 g (100 mmol) of zinc oxide, 13.0 g (98 mmol) of glutaric acid and 150 mL of toluene. Then, in a nitrogen atmosphere, the temperature was raised to 55°C and the reaction was allowed to proceed at the same temperature for 4 hours with stirring. Thereafter, the temperature was raised to 110°C and the moisture was azeotropically removed at the same temperature over 2 hours with stirring, and the subsequent cooling to room temperature gave a reaction mixture containing an organic zinc catalyst. A portion of this reaction mixture was separated and filtered, and the thus-obtained organic zinc catalyst was subjected to IRmeasurement (using Avatar 360 (trade name), product of Thermo Nicolet Japan Co.) to observe a peak based on carboxylic acid group at 3000 to 3600 cm⁻¹.

### <Poly(alkylene carbonate) production>

A one-liter autoclave equipped with a thermometer and stirrer was charged with 8.0 mL of the above-mentioned reaction mixture (containing 1.0 g of the organic zinc catalyst), 200 mL of hexane, 35.2 g (0.80 mol) of ethylene oxide and carbon dioxide. In a nitrogen atmosphere, the system was adjusted to 80°C and 1.5 MPa and the polymerization reaction was carried out for 6 hours while carbon dioxide was supplemented in accordance with the consumption thereof. Thereafter, the autoclave was cooled and depressurized, and a white polymer-containing hexane slurry was obtained. This was filtered, and the solid was washed with 0.5 L of a 1% aqueous hydrochloric acid solution, further washed with pure water and then dried under reduced pressure to give 29.2 g of poly(ethylene carbonate).

### Comparative Example 2

A reaction mixture containing an organic zinc catalyst was obtained in the same manner as in Example 3 except that, in the organic zinc catalyst production in Example 3, 11.6 g (88 mmol) of glutaric acid was used in lieu of 12.7 g (96 mmol) of glutaric acid and 0.6 g (10 mmol) of acetic acid was used in lieu of 0.1 g (2 mmol) of acetic acid. Upon IR measurement of this organic zinc catalyst (using Avatar 360 (trade name), product of Thermo Nicolet Japan Co.), no peak based on carboxylic acid group was observed.
Then, 3.2 g of poly (ethylene carbonate) was obtained in the same manner as in Example 3 except that, in the poly (alkylene carbonate) production in Example 3, 8.0 mL of the above-mentioned reaction mixture (containing 1.0 g of the organic zinc catalyst of the present invention) was used.

### Comparative Example 3

A reaction mixture containing an organic zinc catalyst was obtained in the same manner as in Example 3 except that, in the organic zinc catalyst production in Example 3, 13.0 g (98 mmol) of glutaric acid was used in lieu of 12.7 g (96 mmol) of glutaric acid and 0.5 mg (0.009 mmol) of acetic acid was used in lieu of 0.1 g (2 mmol) of acetic acid. Upon IR measurement of this organic zinc catalyst (using Avatar 360 (trade name), product of Thermo Nicolet Japan Co.), a peak based on carboxylic acid group was observed.
Then, 31.2 g of poly (ethylene carbonate) was obtained in the same manner as in Example 3 except that, in the poly (alkylene carbonate) production in Example 3, 8.0 mL of the above-mentioned reaction mixture (containing 1.0 g of the organic zinc catalyst of the present invention) was used.

### Comparative Example 4

### <Organic zinc catalyst production>

A 300-mL four-necked flask equipped with a condenser, thermometer and stirrer was charged with 16.28 g (200 mmol) of zinc oxide, 16.16 g (100 mmol) of isophthalic acid and 100 mL of 1,4-dioxane. Then, in a nitrogen atmosphere, the temperature was raised to 100°C and the reaction was allowed to proceed at the same temperature for 2 hours with stirring. Thereafter, 14.82 g (200 mmol) of propionic acid was further added and the reaction was allowed to proceed at the same temperature for 3 hours with stirring. After completion of the reaction, the reaction mixture was cooled to room temperature and then filtered, whereby 43.5 g of an organic zinc catalyst was obtained. Upon IR measurement of this catalyst (using Avatar 360 (trade name), product of Thermo Nicolet Japan Co.), no peak based on carboxylic acid group was observed.

### <Poly(alkylene carbonate) production>

A one-liter autoclave equipped with a thermometer and stirrer was charged with 3 g of the above-mentioned organic zinc catalyst, 200 mL of hexane, 35.2 g (0.80 mol) of ethylene oxide and carbon dioxide. In a nitrogen atmosphere, the system was adjusted to 80°C and 1.5 MPa and the polymerization reaction was carried out for 6 hours while carbon dioxide was supplemented in accordance with the consumption thereof. However, the polymerization reaction hardly proceeded and it was impossible to obtain any substantial amount of poly(ethylene carbonate).

**[Table 1]**

| | Composition (mmol) | | | | | | | | | | Peak based on carboxylic acid group | Poly(alkylene carbonate) yield(g) |
|---|---|---|---|---|---|---|---|---|---|---|---|---|
| | Zinc compound | | Aliphatic (aromatic) dicarboxylic acid | | | Aliphatic monocarboxylic acid | | | Epoxide | | | |
| | Zinc oxide | Zinc hydroxide | Glutaric acid | Adipic acid | Isophthalic acid | Acetic acid | Formic acid | Propionic acid | Ethylene oxide | Propylene oxide | | |
| Example 1 | 100 | - | 96 | - | - | 2 | - | - | 800 | - | Not found | 68.4 |
| Example 2 | 100 | - | 96 | - | - | 2 | - | - | - | 800 | Not found | 80.8 |
| Example 3 | 100 | - | 96 | - | - | 2 | - | - | 800 | - | Not found | 70.1 |
| Example 4 | 100 | - | 96 | - | - | - | 2 | - | 800 | - | Not found | 69.2 |
| Example 5 | - | 100 | 96 | - | - | 2 | - | - | 800 | - | Not found | 65.1 |
| Example 6 | 100 | - | - | 96 | - | 2 | - | - | 800 | - | Not found | 59.2 |
| Comparative Example 1 | 100 | - | 98 | - | - | - | - | - | 800 | - | Found | 29.2 |
| Comparative Example 2 | 100 | - | 88 | - | - | 10 | - | - | 800 | - | Not found | 3.2 |
| Comparative Example 3 | 100 | - | 98 | - | - | 0.009 | - | - | 800 | - | Found | 31.2 |
| Comparative Example 4 | 200 | - | - | - | 100 | - | - | 200 | 800 | - | Not found | - |

### INDUSTRIAL APPLICABILITY

When the organic zinc catalyst of the present invention is used, a poly (alkylene carbonate) can be produced from carbon dioxide and an epoxide with very high efficiency.

## Claims

1. An organic zinc catalyst to be used for the reaction for producing a poly(alkylene carbonate) from carbon dioxide and an epoxide,
which is obtained by reacting a zinc compound, an aliphatic dicarboxylic acid and an aliphatic monocarboxylic acid in a mole ratio of 0.0001 to 0.1 relative to the aliphatic dicarboxylic acid.

2. The organic zinc catalyst according to Claim 1,
wherein the zinc compound is zinc oxide or zinc hydroxide.

3. The organic zinc catalyst according to Claim 1 or 2,
wherein the aliphatic dicarboxylic acid is at least one member selected from the group consisting of malonic acid, succinic acid, glutaric acid, adipic acid and sebacic acid.

4. The organic zinc catalyst according to any of Claims 1 to 3,
wherein the aliphatic monocarboxylic acid is at least one member selected from the group consisting of formic acid, acetic acid and propionic acid.

5. The organic zinc catalyst according to Claim 1 or 2,
which has a structure represented by the general formula (1): 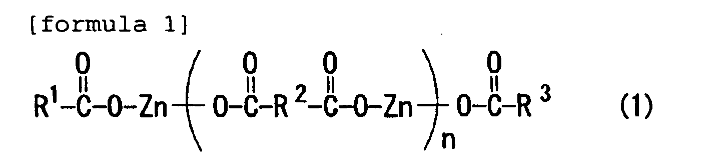 wherein R¹ and R³ may be the same or different and each independently represents a hydrogen atom or a methyl group, n represents an integer of 1 to 100000, R² represents a trimethylene or tetramethylene group, and when n is an integer of not smaller than 2, the n R² groups may be the same or different.

6. A method of producing a poly(alkylene carbonate),
wherein carbon dioxide is reacted with an epoxide in the presence of an organic zinc catalyst obtained by reacting a zinc compound, an aliphatic dicarboxylic acid and an aliphatic monocarboxylic acid in a mole ratio of 0.0001 to 0.1 relative to the aliphatic dicarboxylic acid.

## Patentansprüche

1. Organischer Zinkkatalysator zur Verwendung in der Reaktion zur Herstellung eines Poly(alkylencarbonats) aus Kohlenstoffdioxid und einem Epoxid, welcher erhalten wird durch Umsetzen einer Zinkverbindung, einer aliphatischen Dicarbonsäure und einer aliphatischen Monocarbonsäure in einem Molverhältnis von 0,0001 bis 0,1 relativ zur aliphatischen Dicarbonsäure.

2. Organischer Zinkkatalysator gemäß Anspruch 1, wobei die Zinkverbindung Zinkoxid oder Zinkhydroxid ist.

3. Organischer Zinkkatalysator gemäß Anspruch 1 oder 2, wobei die aliphatische Dicarbonsäure mindestens ein Mitglied ist, ausgewählt aus der Gruppe, bestehend aus Malonsäure, Bernsteinsäure, Glutarsäure, Adipinsäure und Sebacinsäure.

4. Organischer Zinkkatalysator gemäß einem beliebigen der Ansprüche 1 bis 3, wobei die aliphatische Monocarbonsäure mindestens ein Mitglied ist, ausgewählt aus der Gruppe, bestehend aus Ameisensäure, Essigsäure und Propionsäure.

5. Organischer Zinkkatalysator gemäß Anspruch 1 oder 2, welcher eine Struktur besitzt, dargestellt durch die folgende allgemeine Formel (1): 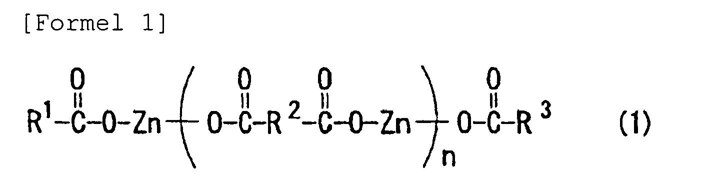 wobei R¹ und R³ gleich oder verschieden sein können, und jeweils unabhängig ein Wasserstoffatom oder eine Methylgruppe darstellen, n eine ganze Zahl von 1 bis 100.000 darstellt, R² eine Trimethylen- oder Tetramethylengruppe darstellt, und wenn n eine ganze Zahl nicht kleiner als 2 ist, so können die n R²-Gruppen gleich oder verschieden sein.

6. Verfahren zur Herstellung eines Poly(alkylencarbonats), wobei Kohlenstoffdioxid mit einem Epoxid in Gegenwart eines organischen Zinkkatalysators, erhalten durch Umsetzen einer Zinkverbindung, einer aliphatischen Dicarbonsäure und einer aliphatischen Monocarbonsäure in einem Molverhältnis von 0,0001 bis 0,1 relativ zur aliphatischen Dicarbonsäure umgesetzt wird.

## Revendications

1. Catalyseur organozincique à utiliser pour la réaction de production d'un poly(alkylène carbonate) à partir de dioxyde de carbone et d'époxyde,
qui est obtenu par réaction d'un composé de zinc, d'un acide dicarboxylique aliphatique et d'un acide monocarboxylique aliphatique dans un rapport molaire de 0,0001 à 0,1 par rapport à l'acide dicarboxylique aliphatique.

2. Catalyseur organozincique selon la revendication 1, dans lequel le composé de zinc est l'oxyde de zinc ou l'hydroxyde de zinc.

3. Catalyseur organozincique selon la revendication 1 ou 2, dans lequel l'acide dicarboxylique aliphatique est au moins un membre choisi parmi le groupe consistant en acide malonique, acide succinique, acide glutarique, acide adipique et acide sébacique.

4. Catalyseur organozincique selon l'une quelconque des revendications 1 à 3, dans lequel l'acide monocarboxylique aliphatique est au moins un membre choisi parmi le groupe consistant en acide formique, acide acétique et acide propionique.

5. Catalyseur organozincique selon la revendication 1 ou 2, qui a une structure représentée par la formule générale (1): 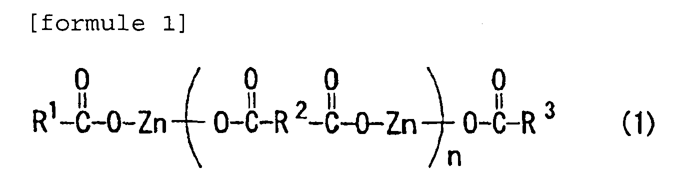 dans laquelle R¹ et R³ peuvent être identiques ou différents et représentent chacun indépendamment l'atome d' hydrogène ou un groupe méthyle; M représente un entier de 1 à 100 000; R² représente un groupe triméthylène ou un groupe tétraméthylène, et si n représente un entier supérieur ou égal à 2, les n groupes R² peuvent être identiques ou différents.

6. Procédé de production d'un poly(alkylène carbonate), dans lequel on fait réagir du dioxyde de carbone avec un époxyde en présence d'un catalyseur organozincique qui est obtenu par réaction d'un composé de zinc, d'un acide dicarboxylique aliphatique et d'un acide monocarboxylique aliphatique dans un rapport molaire de 0,0001 à 0,1 par rapport à l'acide dicarboxylique aliphatique.
